# EUROPEAN PATENT SPECIFICATION

(11) **EP 3 295 084 B1**
(45) Date of publication and mention of the grant of the patent: **03.06.2020**
(21) Application number: 16717971.2
(22) Date of filing: 25.04.2016
(51) Int. Cl.: F23L 15/00, F23C 6/04, F23D 14/22, F23D 99/00, F23D 14/66

(54) **METHOD FOR COMBUSTION OF GASEOUS OR LIQUID FUEL USING A BURNER**
VERFAHREN ZUR VERBRENNUNG VON GASFÖRMIGEN ODER FLÜSSIGEN BRENNSTOFF DURCH VERWENDUNG EINES BRENNERS
PROCÉDÉ DE COMBUSTION DE CARBURANT GAZEUX OU LIQUIDE PAR L'UTILISATION D'UN BRÛLEUR

(30) Priority: 11.05.2015 DE 102015107360
(43) Date of publication of application: 21.03.2018
(73) Proprietor: Outotec (Finland) Oy, 02230 Espoo (FI)
(72) Inventor: MUNKO, Andreas, 61348 Bad Homburg (DE); KÖHLER, Hartmut, 70839 Gerlingen (DE); MADUTA, Robert, 69502 Hemsbach (DE)
(74) Representative: Keil & Schaafhausen Patentanwälte PartGmbB
(86) International application number: PCT/EP2016/059165
(87) International publication number: WO 2016/180623

(56) References cited:
- WO-A1-2007/048429
- WO-A1-2015/018438
- DE-A1-102013 106 682
- US-A- 3 729 285
- US-A- 5 797 738
- US-A1- 2003 148 236
- US-A1- 2006 057 516
- US-A1- 2013 220 075

## Description

The present invention relates to a method for combustion of gaseous or liquid fuel using a burner assembly. Fuel, cold, primary air and preheated air are supplied to a pre-chamber, wherein fuel and primary air are supplied through at least one fuel feed and at least one primary air feed. Preheated combustion air is supplied to a combustion chamber. The invention also relates to a burner assembly for combustion of gaseous or liquid fuel to heat an industrial furnace.

Standard burners are often used in burner assemblies, for example with indurating furnaces of travelling grate pelletizing plants. The commonly used burners stabilize the flame right at the burner tip. Due to the high combustion air temperature, which typically is up to 1000 °C, the flame inside the combustion chamber is very hot. This hot flame, typically with peak temperatures of up to 2000 °C, causes a very high NOx-emission and might also lead to thermal damages at the combustion chamber wall. Typically at travelling grate pelletizing plants the flow velocity of the preheated combustion air is in the range between 15 to 25 m/s.

NOx is one of the major pollutants from industrial heating processes. Although being thermodynamically unstable, NOx decomposition is kinetically hindered and its emissions interfere with the environment in different sectors. For example, NOx enhance formation of smog and acid rain and are responsible for ozone depletion in the stratosphere. Consequently, the legally allowed emission limits of NOx are going to be reduced or have already been reduced leading to the problem that the commonly used standard burners in industrial furnaces, and in particular in indurating furnaces of pelletizing plants, may be no longer allowed to be installed in some countries.

Regarding the NOx emission, indurating furnaces produce high levels of NOx due to the high temperature of the combustion air and the furnace. In particular at temperatures above 1000°C, NOx formation is initiated, wherein the rate of NOx formation is increasing exponentially with temperature. Consequently, a major problem with standard burners and combustion methods are the high flame temperatures caused by ignition of the undiluted fuel leading to a hot flame in the combustion zone with peak temperatures >1500 °C.

In order to reduce the NOx several methods have been employed that basically aim at reducing the high peak temperature inside a burner flame, while maintaining or even reducing the average temperature. Examples for such methods include air and/or fuel staged combustion, waste gas recirculation, flameless oxidation and water injection.

US 5,797,738 discloses a burner with a plate for distributing air and fuel. The plate features on the one hand small openings leading a first portion of the combustion air to mix with fuel and on the other hand larger openings for leading a second portion of the combustion air to mix with the burning fuel downstream of the position where the first portion of the air mixes with the fuel. The smaller openings are sufficiently small for boundary layer effects to influence the ratio of the first portion to the second portion of the combustion air as the temperature of the air changes. Said document discloses the preamble of claim 1.

US2013/0220075 A1 concerns a method for the oxidation and sintering of pellets arranged in a compartment in which the oxidation and sintering take place with the aid of a medium with a defined temperature, which medium heats the pellets. The method comprises the introduction of a first medium into the compartment through an inlet connected to the compartment and the heating of the medium in the inlet through the use of a combustion arrangement, or a part of a combustion arrangement, arranged in the inlet and comprising fuel. The use of the combustion arrangement comprises the ignition of the fuel, the combustion of the fuel whereby combustion heat is developed, and the transfer of combustion heat to the first medium that is present at the combustion arrangement. The essential part is the arrangement of the combustion arrangement - or a part of it - in a region in the inlet that in turn is arranged outside of the direct passage of the first medium in and through the inlet such that the ignition of the fuel. The combustion of the fuel and the transfer of combustion heat to the first medium take place in this region. By the introduction of a second medium into the region in the direct vicinity of the combustion arrangement - or a part of it - where the ignition of the fuel, the combustion of the fuel and the transfer of combustion heat also to the second medium take place followed by further transport of the heated first medium and the heated second medium through the inlet and into the compartment.

WO 01/07 833 A1 utilizes a common flame dilution method recirculating waste gases. These waste gases serve as inert media for the combustion process and at least absorb some of the heat responsible for high temperatures inside the burner flame. Fuel and primary air are introduced through a nozzle and thereby entrain the waste gas subjected perpendicular to the fuel and primary air stream. The combined gas mixture is expanded inside a chamber and subsequently introduced into a furnace through a baffle plate.

In some applications, in particular for an indurating process of a pelletizing plant, the waste gas exhibits such a high oxygen content that a recirculation has not the intended dilution effect of the burner flame and thus does not reduce NOx formation sufficiently.

WO 2012/057 685 A1, WO 2012/057 686 A1 and WO 2012/057 687 A1 describe methods and arrangements for oxidizing and sintering of pellets. In order to reduce NOx emission, preheated combustion air is supplied to the combustion chamber through two separate inlets. In the direct vicinity of the burner combustion air is introduced to ignite the fuel supplied through a nozzle. Downstream of this ignition a second part of the combustion air is introduced to the combustion chamber with a higher temperature of 500 to 1500 °C. Due to this air staged combustion NOx emissions are reduced. However, such air staged combustion provides limited reduction of NOx formation only.

WO 2015/018 438 A1 proposes a burner assembly having a combustion chamber to which fuel and primary air are supplied. Perpendicular to the fuel and primary air stream, hot combustion air is introduced into the combustion chamber. The fuel and/or primary air is/are introduced into the combustion chamber with high exit velocities of at least 150 m/s. The hot combustion air is entrained by the fuel and primary air stream and mixing of fuel, primary air and combustion air occurs. The primary air quantity is higher compared to standard burners for this application. Increased supply pressures of fuel and/or primary air are required for providing high exit velocities.

The high velocity introduction described in WO 2015/018 438 A1 is very cost efficient and easy to implement in particular at older plants. However, increased amounts of cold primary air are needed and it is still desirable to further decrease the overall NOx formation as well as investment and operation costs.

It is, therefore, an object of the present invention to propose a method, in particular for an indurating furnace, having reduced NOx emission.

This object is accomplished with the features of independent claim 1. Fuel, cold primary air and preheated air are supplied to a pre-chamber, wherein fuel, which may be in liquid or gaseous state, is supplied through at least one fuel feed and the primary air is supplied through at least one primary air feed. Downstream of the pre-chamber combustion air is supplied to a combustion chamber. In line with the invention preheated air and/or the primary air are injected parallel to the fuel into the pre-chamber.

With the upper mentioned invention the amount of cold, primary air needed is significantly reduced due to the pre-chamber. The reaction in the pre-chamber takes place at a much lower air temperature thus generating lower peak temperatures in the flame. Fuel is partly consumed and the remaining part is diluted with primary air, preheated air and/or preheated combustion air when reaching the main combustion chamber, thus leading to a less intense combustion reaction in said main combustion chamber.

In case of no combustion reaction in the pre-chamber takes place due to increased amounts of cold, primary air and/or a low temperature of the preheated air, the fuel mixes with the cold air and with the preheated air and gets diluted over a large volume. This extremely slows down the main reaction taking place in the main combustion chamber. Consequently the reaction rate of the combustion is reduced and so are NOx emissions. In line with the present invention, resulting NOx emissions are lower compared to air-staged combustion in a precombustion chamber.

Therefore, advantages of our recent invention are:
1) Due to the use of the pre chamber, less primary air is needed than our burner in WO 2015/018 438 A1 needs.
2) Due to the use of our burner in a pre-chamber, the NOx emission is lower than at a state of the art air staged combustion with a pre combustion chamber.

In line with the current invention, flow disturbances are mainly avoided inside the pre-chamber. However, a specific pre-mixing inside the pre-chamber is observed. Due to parallel injection, shear induced turbulence production only occurs in the outer shell of each injection stream (fuel as well as primary and/or preheated air), while the core of the streams remains intact in the pre-chamber. On its way through the pre-chamber and combustion chamber into an adjacent furnace, e.g. of a pelletizing plant or of Steel Belt Sintering (SBS™), the mixing progresses further into the streams core. Since mixing of fuel and air is required for the combustion reaction, the latter is retarded in line with the invention such that the peak flame temperature and NOx formation are reduced.

The ignition of the pre-mixed streams as described above is achieved inside the combustion chamber to which hot combustion air is supplied. Depending on parameters such as dimensions of burner and pre-chamber as well as temperature and flow of primary air and preheated air, the fuel/air mixture partly reacts in the pre- chamber. The preheated combustion air is entrained by the streams (fuel, primary and preheated air) injected parallel into the pre-chamber.

According to the invention, a parallel injection is obtained in cases the trajectories of the corresponding streams introduced into the pre-chamber deviate from each other less than 10°, preferably less than 5°, more preferably less than 3°. The trajectories of said streams are basically determined by the shape and orientation of the corresponding inlets. The simplest and preferred shape for such an inlet is a circular opening of a straight tube, which has little or even no influence upon the trajectory of the stream introduced. This is in contrast to the more common fuel and/or air injection including a swirling device resulting in a broader distribution of the stream, which is basically cone-shaped. For a circular opening of a straight tube, the trajectories of the stream guided through said tube and opening can be determined as perpendicular to the area enclosed by the radial outer wall of the circular opening. In this regard it is also preferred that the trajectories are further directed towards the combustion chamber.

In a preferred embodiment of the invention, the fuel and/or the primary air is/are injected into the pre-chamber with an exit velocity of more than 250 m/s, preferably more than 300 m/s. It is particularly preferred that the exit velocity of pre-heated air is below 100 m/s. In line with the invention, fuel gas is continuously mixed with primary air and preheated air. This mixing process is stageless and has two important features. The inventive mixing delivers a highly diluted, partly reacted fuel gas into the highly reactive combustion zone in the combustion chamber. In addition, for the case the primary air is introduced in a cylinder surrounding the fuel the inventive mixing shields the fuel gas after exiting the fuel nozzle outlet from contact to high temperature combustion air, and thus direct and strong reaction in the combustion chamber is avoided.

It is preferred that the preheated air has a temperature of between 25 and 800 C, particular between 200 and 700°C and preferably between 400 and 600 C. The fuel and primary air are heated up by the preheated air to such an extent that, depending on the type of fuel, an autoignition of the fuel inside the pre-chamber may occur and a first combustion zone may establish in the pre-chamber. The entrainment of hot combustion air allows autoignition and complete combustion of the fuel-air mixture inside the combustion chamber.

The primary air is relatively cold, in particular the primary air has a temperature of less than 150°C, preferably less than 100°C and mostly preferred between 20°C and 100°C.

It is particularly preferred that the temperature of the preheated air is above the autoignition temperature of the fuel-air mixture inside pre-chamber. Nevertheless, a flame ignition is avoided due to dimensions and, flow and/or temperature setting. This seems to be explained by the specific pre-mixing as obtained by the invention. Due to the fact only a small volume of fuel, primary air and pre-heated air is mixed it seems that an ignition of the mixture is not trigged by the high temperatures of the preheated gas. Although not fully understood, this may be explained in that the reaction in the pre-chamber takes place with diluted fuel. Dilution is achieved by an excess amount of relatively cold primary air. The cold primary air shields the fuel and at the same time dilutes the fuel due to mixing downstream. The pre-heated air is also admixed in the pre-chamber, namely with the cold air first and subsequently with the cold-air-diluted-fuel mixture, leading finally to reaction (combustion). Since the fuel is highly diluted and the process air relatively cold (e.g. 600 °C) this reaction is supposed to take place in a relatively moderate way.

Most preferably, the preheated air has a temperature more than 400 °C, preferably more than 450 °C, and most preferably more than 500 °C. These temperatures are energetically favorable, but were not applied in prior art processes, since such high preheated air temperatures in general enhance NOx formation. It was found in line with the invention that the parallel injection of fuel, primary air and/or preheated air allows the application of higher preheated air temperatures without increasing NOx emission.

In a further preferred embodiment, the preheated combustion air has temperature of more than 750° C, preferably more than 800°C and mostly preferred between 900 and 1000 °C, and an oxygen concentration between 17 and 25 Vol-%, preferably between 18 and 22 Vol-%, mostly preferred about 21 Vol-%. Said temperature and oxygen content range are particular advantageous for ignition of the fuel, primary air and preheated air mixture inside the combustion chamber.

In accordance with a preferred variant, the so called excess air ratio of the pre-heated combustion air (λ_{combustion air}) is between 2 and 6, preferably between 3 and 5 and mostly preferred about 4. The excess air ratio is the ratio between the mass flow of air (mₐᵢᵣ) to the minimum mass flow of air required for complete (stoichiometric) combustion (m_{air,stoich}), in this case the values relate to the mass of the preheated combustion air. Concluding, at least twice the amount of oxygen required for complete reaction with the fuel is introduced by the preheated combustion air.

The high amount of excess combustion air ensures complete combustion of the fuel inside the combustion chamber and the adjacent furnace. Furthermore, high air content is maintained inside the furnace, which is particular important for indurating furnaces.

It was found advantageous that the excess air ratio of the primary air (λ_{primary air}) is between 0.1 to 0.6, preferably between 0.2 and 0.4. The excess air ratio of the primary air is determined using the masses for primary air instead of pre-heated combustion air, as described above. Therefore, λ_{primary air} is the ratio between the mass flow of primary air to the minimum mass flow of primary air required for complete (stoichiometric) combustion. Low excess air ratios (i.e. less than 0.6) enable a very energy efficient combustion process, since the primary air is in general not preheated and has to be heated by the combustion reaction. This is actually intended in the state of the art, in which the primary air serves as a heat sink in order to prevent high peak temperatures causing high NOx emissions. In line with the present invention, the amount of primary air injected is reduced.

In an alternative embodiment, the excess air ratio inside the pre-chamber is between 0.6 to 1.5, preferably between 1.0 and 1.2. The advantage of this is that the NOₓ emissions can be reduced to a very low value nearly upto zero.

Further features, advantages and possible applications of the invention can also be taken from the following description of an exemplary embodiment and the drawing. All features described and/or illustrated form the subject-matter of the invention per se or in any combination, independent of their inclusion in the claims or their back-reference.

In the drawings:
- Fig. 1: schematically shows a section through a burner assembly used to operate the inventive method,
- Fig. 2: schematically shows the fuel, primary air and preheated air inlets in a view perpendicular to the streams trajectories,
- Fig. 3: illustrates the flow trajectories and the turbulences occurring in the outer shell of the streams introduced into the pre-chamber

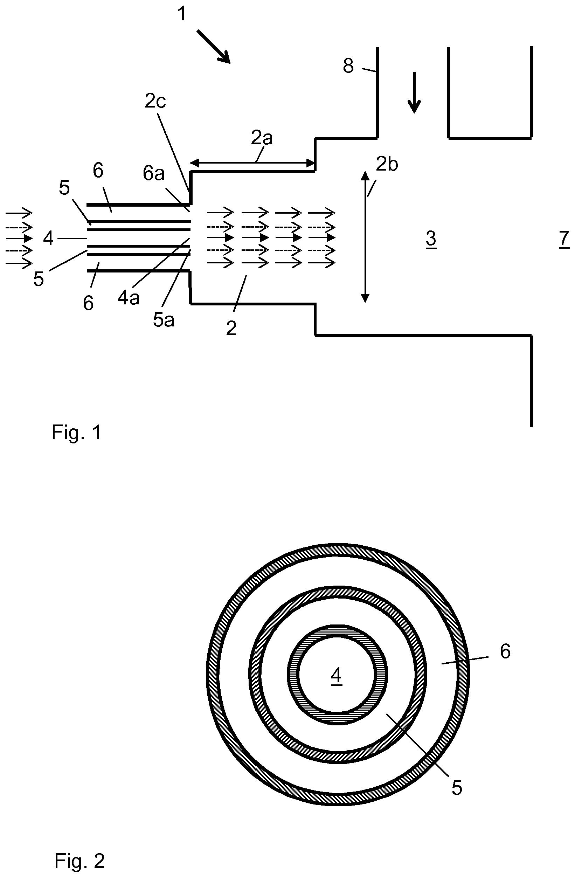

In Fig. 1 a burner assembly 1 used to operate the inventive method is shown in a sectional view. The burner assembly 1 has a pre-chamber 2, a combustion chamber 3 and inlet ducts for fuel 4, primary air 5 and preheated air 6. These inlet ducts comprise corresponding inlets for fuel 4a, primary air 5a and for preheated air 6a.

The combustion chamber 3 is arranged adjacent and downstream of the pre-chamber 2 and itself is connected to a furnace 7, which is downstream of the combustion chamber 2. Further a combustion air inlet, i.e. a downcomer 8, as inlet to the combustion chamber 3 is provided for introduction of combustion air. The pre-chamber itself has a pre-chamber length 2a and a pre-chamber diameter 2b, wherein the length 2a is greater than the diameter 2b. Therefore, the pre-chamber of this invention is expected to be smaller than a standard precombustion chamber.

In the embodiment shown in Fig. 1 the fuel inlet duct 4 is surrounded by the primary air inlet duct 5, which is again surrounded by the preheated air inlet duct 6. The corresponding inlet openings are flush with the inner side of a wall of the pre-chamber 2c. Furthermore, the inlets 4a, 5a and 6a are arranged perpendicular to the pre-chamber wall 2c. The inlets 4a, 5a and/or 6a may be designed as a nozzle. The preferred embodiment does not include an additional swirler for fuel, primary air and/or preheated air as this contradicts the technical effect of the invention.

For illustration purposes the preferred arrangement of the ducts 4, 5 and 6 is also shown in Fig. 2. In Fig. 1 the trajectories of the fuel, primary air and pre-heated air are parallel during introduction into the pre-chamber 2. The concentrical arrangement as shown in Fig. 1 and 2 is one way to ensure parallel trajectories. In an alternative to that the inlet ducts 4, 5 and 6 may introduce fuel, primary air and preheated air through inlets 4a, 5a and 6a at different locations of the pre-chamber wall 2c.

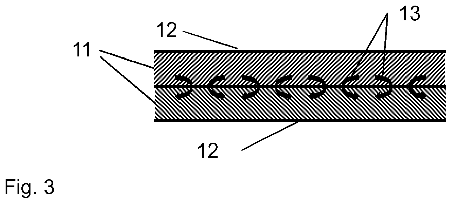

In Fig. 3 the flow trajectories inside the pre-chamber for two streams 11 are illustrated. These are basically parallel and mixing occurs mainly in the outer shell 12 of the streams due to small turbulences 13 (turbulences in this region are very large due to the high shearing between slow pre-heated air and fast gas/primary air) in this region as illustrated in Fig. 3. Consequently, a reduction of NOx formation can be obtained out of the following reasons: Basically high amount of cold air mixes partly with gas/liquid and dilutes the combustion media. The pre-heated air mixes with the already diluted mixture and leads to a more diluted mixture. The pre-heated temperature is relatively low so that reaction is delayed for the diluted mixture. The delay is even more increased through the very high velocity jets which avoid a stable reaction in the primary region right behind the nozzle exit. Each delay leads to even more mixing and dilution.

### List of reference signs

- 1: burner assembly
- 2: pre-chamber
- 2a: pre-chamber length
- 2b: pre-chamber diameter
- 2c: pre-chamber wall
- 3: combustion chamber
- 4: fuel inlet tube
- 4a: fuel inlet
- 5: primary air inlet tube
- 5a: primary air inlet
- 6: preheated air inlet duct
- 6a: preheated air inlet
- 7: furnace
- 8: downcomer
- 11: fuel, primary air and/ or preheated air streams
- 12: outer shell(s) of the fuel, primary air and/or preheated air streams
- 13: turbulences

## Claims

1. Method for combustion of gaseous or liquid fuel using a burner assembly for heating an industrial furnace (7), wherein fuel (4a), cold primary air (5a) and preheated air (6a) are supplied to a pre-chamber, whereby the pre-chamber (2) has a length and a diameter wherein the length is greater than the diameter, the fuel and cold primary air being supplied through at least one fuel feed (4) and at least one primary air feed (5), wherein preheated combustion air (8) is supplied to a combustion chamber (3) connected to the furnace (7), which is downstream of said combustion chamber (3) **characterized in that** the preheated air and/or the cold primary air are injected parallel to the fuel into the pre-chamber (2), wherein the cold primary air has a temperature of less than 150°C and the preheated air has a temperature more than 400 °C, that the fuel, the primary air and/ or the preheated air is/ are injected into the pre-chamber (2) with an exit velocity in the range of 250 to 400 m/s and that excess air ratio (λ) of the primary air is between 0.1 to 0.6 or that excess air ratio (λ) in the pre-chamber is between 0.6 to 1.5.

2. Method according to any of the preceding claims, **characterized in that** the preheated air has a temperature above the auto ignition temperature of the fuel/ air mixture inside pre-chamber.

3. Method according to any of the preceding claims, **characterized in that** the preheated combustion air has a maximum temperature of more than 750° C and an oxygen concentration between 17 and 21 Vol-%.

4. Method according to any of the preceding claims, **characterized in that** excess air ratio of the preheated combustion air is between 2 and 6.

## Patentansprüche

1. Verfahren zur Verbrennung von gasförmigem oder flüssigem Brennstoff unter Verwendung einer Brenneranordnung, wobei Brennstoff, kalte Primärluft und vorgewärmte Luft einer Vorkammer zugeführt werden, wobei die Vorkammer eine Länge und einen Durchmesser aufweist, wobei die Länge größer als der Durchmesser ist, wobei der Brennstoff und die kalte Primärluft durch mindestens eine Brennstoffzufuhr und mindestens eine Primärluftzufuhr zugeführt werden, wobei vorgewärmte Verbrennungsluft einer Brennkammer zugeführt wird, welche mit einem Ofen verbunden ist, der besagter Brennkammer nachgeschaltet ist, **dadurch gekennzeichnet, dass** die vorgewärmte Luft und/oder die kalte Primärluft parallel zum Brennstoff in die Vorkammer eingeblasen wird, wobei die kalte Primärluft eine Temperatur von weniger als 150 °C und die vorgewärmte Luft eine Temperatur von mehr als 400 °C hat, dass der Brennstoff, die Primärluft und/oder die vorgewärmte Luft mit einer Austrittsgeschwindigkeit im Bereich von 250 bis 400 m/s in die Vorkammer eingeblasen wird/werden und dass das Luftüberschussverhältnis (λ) der Primärluft zwischen 0,1 und 0,6 oder das Ex-Zugluftverhältnis (λ) in der Vorkammer zwischen 0,6 und 1,5 liegt.

2. Verfahren nach einem der vorstehenden Ansprüche, **dadurch gekennzeichnet, dass** die vorgewärmte Luft eine Temperatur oberhalb der Selbstentzündungstemperatur des Kraftstoff/Luft-Gemisches in der Vorkammer hat.

3. Verfahren nach einem der vorstehenden Ansprüche, **dadurch gekennzeichnet, dass** die vorgewärmte Verbrennungsluft eine maximale Temperatur von mehr als 750 °C und eine Sauerstoffkonzentration zwischen 17 und 21 Vol-% aufweist.

4. Verfahren nach einem der vorstehenden Ansprüche, **dadurch gekennzeichnet, dass** das Luftüberschussverhältnis der vorgewärmten Verbrennungsluft zwischen 2 und 6 liegt.

## Revendications

1. Procédé de combustion d'un carburant gazeux ou liquide par l'utilisation d'un ensemble brûleur permettant le chauffage d'un four industriel (7),
dans lequel un carburant (4a), de l'air primaire froid (5a) et de l'air préchauffé (6a) sont apportés à une préchambre, moyennant quoi la préchambre (2) a une longueur et un diamètre dans lesquels la longueur est supérieure au diamètre, le carburant et l'air primaire froid étant apportés par l'intermédiaire d'au moins une alimentation en carburant (4) et d'au moins une alimentation en air primaire (5), dans lequel de l'air de combustion préchauffé (8) est apporté à une chambre de combustion (3) reliée au four (7), qui est situé en aval de ladite chambre de combustion (3),
**caractérisé en ce que** de l'air préchauffé et/ou de l'air primaire froid sont injectés de manière parallèle au carburant dans la préchambre (2),
dans lequel l'air primaire froid a une température inférieure à 150 °C et l'air préchauffé a une température supérieure à 400 °C,
**en ce que** le carburant, l'air primaire et/ou l'air préchauffé est/sont injectés dans la préchambre (2) avec une vitesse de sortie dans la plage allant de 250 à 400 m/s et **en ce que** le rapport d'excès d'air (λ) de l'air primaire est compris entre 0,1 et 0,6 ou **en ce que** le rapport d'excès d'air (λ) dans la préchambre est compris entre 0,6 et 1,5.

2. Procédé selon l'une quelconque des revendications précédentes, **caractérisé en ce que** l'air préchauffé a une température supérieure à la température d'auto-inflammation du carburant/mélange d'air à l'intérieur de la chambre.

3. Procédé selon l'une quelconque des revendications précédentes, **caractérisé en ce que** l'air de combustion préchauffé a une température maximale supérieure à 750 °C et une concentration en oxygène comprise entre 17 et 21 % en volume.

4. Procédé selon l'une quelconque des revendications précédentes, **caractérisé en ce que** le rapport d'excès d'air de l'air de combustion préchauffé est compris entre 2 et 6.
